# EUROPEAN PATENT SPECIFICATION

(11) **EP 4 382 816 B1**
(45) Date of publication and mention of the grant of the patent: **25.09.2024**
(21) Application number: 22211925.7
(22) Date of filing: 07.12.2022
(51) Int. Cl.: F24D 5/12, F24F 5/00, F24F 1/0003

(54) **SYSTEM FOR HEATING OR COOLING OF A BUILDING**
SYSTEM ZUM HEIZEN ODER KÜHLEN EINES GEBÄUDES
SYSTÈME DE CHAUFFAGE OU DE REFROIDISSEMENT D'UN BÂTIMENT

(43) Date of publication of application: 12.06.2024
(73) Proprietor: Boiko, Serhii, 35652 Zbytyn, Rivne Oblast (UA)
(72) Inventor: Boiko, Serhii, 35652 Zbytyn, Rivne Oblast (UA)
(74) Representative: AOMB Polska Sp. z.o.o.

(56) References cited:
- EP-B1- 2 339 253
- DE-U1- 29 711 263
- FR-A1- 3 059 086
- US-A- 4 449 572
- US-A1- 2007 137 236
- US-A1- 2020 141 596

## Description

### Technical Field

The invention is related to a system for system for heating or cooling of a building, in particular - of a house or a flat.

### Background

Systems for cooling/heating of dwellings, such as air conditioning systems, and water generation systems from the humid air are known in the art.

A US patent US9222689B2 discloses a system of combined air conditioning and water generating system. The whole system is divided into two subsystems. In subsystem 1, the working fluid for heating/cooling the dwelling is cooled/heated outside of the dwelling by the working fluid that is circulating in subsystem 2, giving away or taking the heat from the working fluid in subsystem 1. Subsystem 2 also can generate water condensing the humid air. Moreover, optionally, the air from the subsystem 2 may be supplied to a building's interior environment.

The US7343754B2, WO2016033544A1, and RU2146744C1 disclose the devices, systems, and methods for water generation from the atmospheric air. The systems are characterized by open cycles where the air flows through underground or partially underground pipes. Because of that, the air temperature decreases and the condensation of the water from the atmospheric air in the container (numerals 16 and 110 in US7343754B2 and WO2016033544A1, respectively) take place.

The flow of the air through the systems is forced by the addition of external energy. The source of that energy might be e.g. the energy from the Sun or an electrically powered fan or engine.

Company REHAU offers a commercially available product that decreases energy consumption in the way that the air used in the system for keeping a set temperature in a house, having a heat exchanger (such as a heat pump or an air condition unit), is not provided directly from the surroundings through the heat exchanger to the building but is rather going through the system of underground pipes. The pipes are sufficiently long in order for the air to preliminary cool down or heat up. After that, the air enters the building. Due to the fact that the ambient air is used in the buildings, the installation of the cleaning filters and pipes with the silver ions is necessary.

FR3059086A1 discloses a system for producing heating and/or domestic hot water comprising: - a control unit; - a heat pump equipped with a compressor, a condenser, a pressure reducer and an evaporator; and according to the invention, the system further comprises a climatic well equipped with an enthalpy exchanger ensuring, via a waterproof-breathable membrane, a sensitive energy transfer as well as a vapor transfer. Water between the ground and the air flow passing through the well, the system being configured to be able to bring the air flow leaving the enthalpy exchanger to the evaporator of the water pump heat.

US4449572A discloses a method and equipment for increasing the efficiency of a heat pump is the subject of the present invention. The method comprises providing an underground pathway for air travel, forcing a quantity of air through the pathway for operation of the heat pump, and directing air emanating from the underground pathway to the heat pump inlet. The equipment of the invention comprises a heat pump, an underground conduit presenting an elongated path for accommodating the flow of air therethrough for heat exchange purposes with the earth, with the outlet of the underground conduit being disposed for directing air toward the heat pump.

US2020141596A1 discloses a system for conditioning air of a building that comprises a conduit buried in a soil proximate the building at a given depth such that a temperature of the soil at the given depth is different from an air temperature of an environment of the building. The conduit has a breathable wall in fluid communication with the soil. The system further comprises a forced air system in fluid communication with the conduit. The forced air system is operable to draw air from the soil across the breathable wall and along the conduit. The system defines a fluid flow path extending from the breathable wall toward the forced air system. A method of operating the system is also disclosed.

DE29711263U1 discloses a device for generating solar energy, characterized in that a warm exhaust air stream led out of an object to be heated flows along a translucent guide on the top and/or on the bottom of a solar heat recovery element, whereby the solar heat recovery element is heated both by the light energy incident through the translucent guide and by the warm exhaust air flowing along the top and/or the bottom of the solar heat recovery element, and whereby on the translucent guide of the warm exhaust air flow melts snow or ice there, increasing the efficiency of the solar heat recovery element.

EP2339253B1 discloses a passive air-conditioning system for the house, comprising an air-to-air heat exchanger that is installed in a technical room. The exchanger comprises air passage paths that are separated by a heat transfer wall. A double flow controlled mechanical ventilation comprises air passage paths, where one of the air passage paths is in communication with an inlet opening. An evacuation duct is in communication with a by-pass primary to direct air toward a space or toward outside.

US2007137236A1 discloses a ground heat exchanger utilizing the geothermal energy of the ground, comprising pipe conduits and channels mounted within a support structure. According to the invention, a layer of air-permeable materials is formed on the virgin soil, horizontally and/or at a small inclination angle relative to the horizontal direction, creating a circulation channel of the exchanger, the channel being confined by a support slab with spacer elements coupled with a construction net seated onto a stabilizing net, the whole structure being covered by an insulating layer. Furthermore, the heat exchanger is equipped with a collector of the process air having an appropriate shape.

None of the abovementioned prior art documents provide a solution as described in the present invention. The present invention has a closed fluidic duct for heating or cooling a building that comprises a heat exchanger, e.g. a heat pump or air conditioning unit, and has an open fluidic duct for supplying the air, pre-heated or pre-cooled in the ground, to exchange heat with the heat exchanger of said closed fluidic duct. This results in remarkable savings in energy needed to power such a system, because pre-heating or pre-cooling of air is done "for free" as the results of temperature difference of the ground and the air, which passes in pipes provided in the ground. In addition, the system can be used for obtaining water by condensation of steam contained in the atmospheric air.

### Summary

It is thus the object of the present invention to provide an improved system for heating or cooling of dwellings, in particular - houses or flats, characterized by lower energy consumption. It is another object of the present invention to provided a system, which - at the same time - may be used to obtain water, which water, in turns, may be further used e.g. in agriculture.

The authors of the present invention unexpectedly discovered that both aforementioned objectives may be reached by proposing a system, which comprises a closed fluidic duct for heating or cooling a building that comprises a heat exchanger, e.g., heat pump or air conditioning unit, and an open fluidic duct for supplying the air, pre-heated or pre-cooled in the ground, to exchange heat with the heat exchanger of said closed fluidic duct, wherein the open fluidic duct intakes atmospheric air and conducts the air through underground pipes before delivering the air to a place, where this air can exchange heat with the heat exchanger of the closed fluidic duct. In this process, condensation of steam contained in this air may occur in said pipes, due to a temperature difference between the air and the ground, in which the pipes are placed. As the air from the open fluidic duct does not enter the closed fluidic duct, nor the building/dwelling/house - the quality of this air is not of importance. As the result - any filters or any other means for cleaning the air from mechanical or biological pollution (such as nano-silver linings for elimination harmful microorganisms) in the open fluidic duct may be used, but are not necessary in the invention.

The inventive system for heating or cooling of a building, comprising:
- a first fluidic duct and a second fluidic duct, wherein
   - the first fluidic duct forms an open cycle, uses air as a working fluid and comprises successively, when viewed along the path of the air flowing through the said first fluidic duct:
      a) an inlet for allowing the air into the first fluidic duct,
      b) at least one underground well, which is in the form of generally vertical hollow cylinder that is connected with the inlet at the top side of the well,
      c) at least one underground pipe connected at one end to the side of the underground well, while the other end of the pipe is connected to either another well or to a room,
         wherein the underground well has a larger diameter than the underground pipe,
         wherein the pipe which connects one of the at least one underground wells to the room has its connection to the room elevated with respect to its connection with their respective underground well,
      d) the room, which on one hand connects with the underground pipe and on the other - is provided with means for directing the air towards the outlet, and furthermore the room houses a heat exchanger, wherein the air flowing through the first fluidic duct flows along one of the sides of the heat exchanger which allows for exchanging heat,
      e) an outlet connected with the heat exchanger configured for allowing the air from the first fluidic duct into atmosphere;
   - the second fluidic duct forms a closed cycle and comprises: one or more heat exchangers for heating or cooling of the building and the heat exchanger, located in the room and configured for exchanging heat with the air from the first fluidic duct in the room,
wherein
the first fluidic duct and the second fluidic duct are fluidically separated, wherein the underground wells are equipped with means for extracting water therefrom.

Preferably, the second fluidic duct is a heat pump system, which comprises heaters in the building, underground installation for collecting heat and the heat exchanger in the room.

Alternatively, the second fluidic duct is an air conditioning system, which comprises at least one air conditioning unit in the building and the heat exchanger in the room.

Preferably, the system comprises from 1 to 50 underground wells, connected by underground pipes, preferably 3 or 4 underground wells, connected by underground pipes.

Preferably, the underground pipes, that are located between respective underground wells, are tilted off the horizontal direction, so that water condensing therein is lead to underground wells, preferably are inclined by at least 1cm per 1m of the length of the pipe, in the direction from the outlet to the inlet.

Preferably, the underground pipes have the length from 30m to 35m each and/or the length from 120m to 1750m in total and/or have diameter from 110mm to 500mm.

Preferably, the underground pipes are made of plastic, concrete or natural material, such as wood or stalk of a plant.

Preferably, the system further comprises one or more air filters, especially placed in the inlet.

Preferably, the system further comprises one or more means for cleaning the air from mechanical or biological pollution, such as nano-silver linings, especially placed in the underground pipes and/or underground wells.

Preferably, the first fluidic duct ends with an outlet leading from the room to the atmosphere.

Preferably, the first fluidic duct additionally comprises an underground outlet pipe between the room and the outlet.

In such case, preferably, the outlet pipe connects the room with the outlet located in one of the underground wells.

In such case, preferably, the system additionally comprising means for automatically or manually opening and closing of the outlet pipe.

In a preferred embodiment, there is an additional recuperator in the building, which recuperator is connected by a connecting pipe with the outlet pipe.

### Brief Description of the Drawings

Preferred embodiments of the present invention are presented in a more detailed way with reference to the attached drawing, in which:
Fig. 1 shows schematically an example of a system for air conditioning of the building and water generation according to the invention and
Fig. 2 shows schematically another example of a system for air conditioning of the building and water generation according to the invention.

The following reference numerals are used in the figures: 1 - inlet, 2 - underground well, 3 - pipe buried in the ground, 4 - room with a heat exchanger of the second fluidic duct (a closed cycle), 5 - heat exchanger of the second fluidic duct, 6 - house, 7 - outlet pipe, 8 - outlet, 9 - recuperator, 10 - connecting pipe.

### Detailed Description

Preferred embodiments of the invention are described in details below. The examples serve only as an illustration and do not limit the scope of the present invention.

### Example 1

The system comprises a first (open) fluidic duct and a second (closed) fluidic duct. The fluidic ducts are described below, as well as the process of heating or cooling a building with the use of the fluidic ducts.

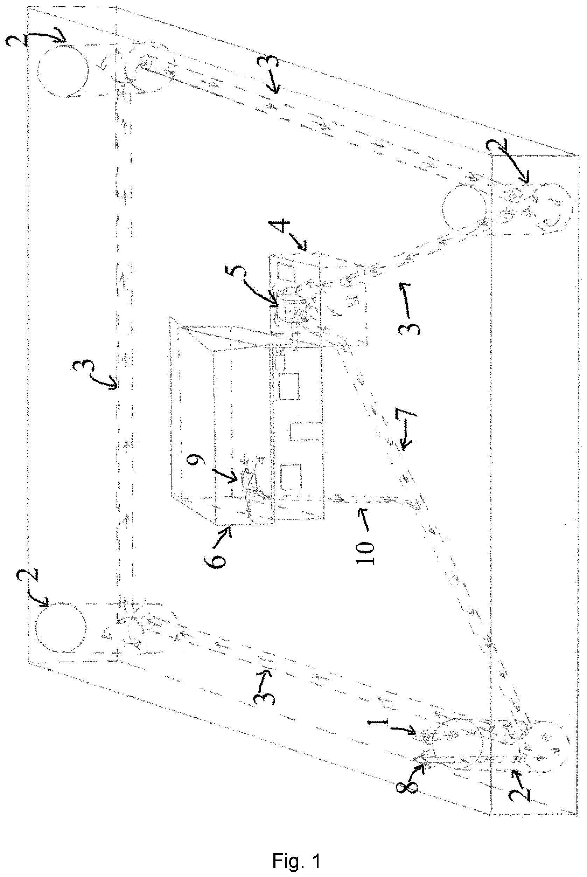

The process starts from the open fluidic duct, where the inlet 1 takes in the air. The inlet may but does not have to comprise air filters, because the air from the open fluidic duct does not enter the building 6 and does not enter the closed fluidic duct either. Then the air enters the underground well 2 where the air can be accumulated and the collection of water happens. From the well 2, the air goes through the pipe 3, buried underground, to the next well 2. In Fig. 1 there are four wells 2. However, there should be at least one well 2, while the maximum number of wells 2 is not limited. A cycle designed for a typical house comprises a few e.g. 1, 2, 3 or 4 wells. In Fig. 1 sewage pipes 3 are used, but pipes 3 can be any other type of pipes, suitable for conducting air and of appropriate dimensions. Typically, pipes 3 having typically the length from 30m to 35m and having typically the diameter from 110mm to 500mm would be used. The total length of pipes 3 is typically from 120 to 140m. The pipes 3 can be made of any suitable material, such as e.g. polymer or concrete. After passing several wells 2 and pipes 3, the air goes to a room 4 where the heat exchanger 5 is located. The heat exchanger 5 is preferably an air-water type or an air-air type exchanger of a heat pump or an air conditioning unit. The air enters the heat exchanger 5 and through the fan inside the heat exchanger 5 is ejected to the surrounding through the outlet 8. If the temperature of the surrounding is -1/-5°C, it is preferably that the outlet pipe 7 is connected to the first well 2 with the help of outlet pipe 7 in order to prevent the freezing of the pipes 3. Optionally, the building 6 comprises a simple recuperator 9 which is connected to the outlet pipe 7 by the connecting pipe 10 in order to take warm air from the building 6 and additionally heat up the air in the outlet pipe 7. The room 4 with the heat exchanger 5 is generally a closed room, i.e. the heat exchanger 5 is not located in the open air outdoors, but is rather placed in a closed space of the room 4. The room 4 can be connected to the building 6 for heat exchange. Alternatively, the room 4 can be underground. Because the working fluid air in the first open fluidic duct does not enter the building, there is no need in the pre-treatment of the working fluid. There is no need either for any special types of the piping system. In particular, no layers of silver nanoparticles are needed in the pipes 3 to prevent growth of microorganisms. Absence of all such additional requirements in the present invention decreases the overall cost of the inventive system. During the summer, the temperature of the air near the ground can be as high as 40°C. During the winter, it can be as low as - 30°C. Both given values vary of course depending on the country. However, the temperature of the ground does not change as much as the air temperature during the year. Also, in the summer, the ground is generally colder that the air, while in winter, the ground is generally warmer than the air. Due to this fact, while the air from the surroundings comes through the wells 2 and pipes 3 it gets pre-cooled (in summer) or pre-heated (in winter) before it reaches the room 4. As this air is used to exchange heat with the heat exchanger 5, the heat exchanger 5 works at the lower temperatures (in summer) or higher temperatures (in winter), which effectively lowers energy consumption by the heat exchanger 5. An estimated profit of the present invention is about 50% less energy consumption in comparison to commercially available products. When the first open fluidic duct is used in the summer regime, then condensation of the water from the air takes place in pipes 3, because the pipes 3 are of lower temperature than the air inside them. The condensed water is then collected through the pipes 3 to the wells 2. To facilitate this process and to prevent the first open fluidic duct from being flooded, the pipes 3 should not be ideally horizontal, but rather inclined towards the wells 2, while the wells 2 should be provided with means for extracting water collecting therein. The collected water might be used according to the needs, for example, in agriculture. The inclination should be at least 1 cm per 1m of length of the pipe 3.

The effectiveness of cooling or heating the air in the pipes 3 depends on the time the air is going through in them. In turn, the time the air spends in the pipes 3 depends on the length and diameter of the pipes 3.

The second fluidic duct is a typical closed fluidic duct for heating heat pump or cooling air conditioner of the building known in state of the art. Heat pumps or air conditioners are used to exchange the heat between the place they are installed in and a refrigerant or surroundings. If considering a heat pump, the heat transfer will occur between two heat exchangers where one is located outside of the building 6 that supplies heated air for the heat exchange and the other will be installed in the building 6 heating the air inside directly or heating the water that is then circulated around the building 6 through radiators or underfloor heating to release the heat to the building 6. Additionally, the heat pumps may operate in cooling mode. Then the process is essentially similar to that described above with the only difference being that heat exchanger 5 will supply cooled air for the heat exchange. In the prior art, the heat exchanger 5 is typically located outside the building 6, in the open air (outdoors). According to the present invention, the heat exchanger 5 is located in the room 4, where it is able to exchange heat with the air from the first, open fluidic duct.

### Example 2

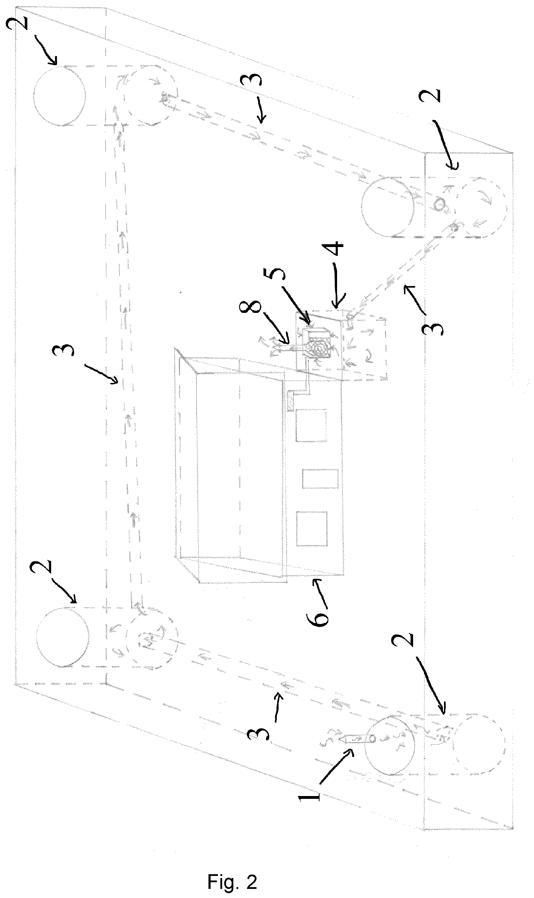

The system is presented in Fig. 2. It is essentially similar to that of example 1, with only the following differences: there is no recuperator 9, there is no connecting pipe 10, no outlet pipe 7 and the air from the first open fluidic duct goes directly from the room 4 to the surroundings through the outlet 8 mounted in room 4.

Example 1 provides an arrangement which prevents freezing of pipes 3 at lower temperatures of the surroundings. Example 2 is preferable in warmer countries, where the temperature of the surroundings does not drop below 0°C.

### Further Examples

Yet another embodiment of the present invention is foreseen (not shown in the drawings). In that embodiment, the first fluidic duct may have both the outlet 8 mounted in room 4, leading from room 4 to the surroundings, and the outlet pipe 7, leading from room 4 to the first underground well 2 and the outlet 8 mounted between this well and the surroundings. In such case, there may be additional device installed to selectively open either the outlet 8 or the outlet pipe 7 (and closing the other one) as the final part of the fluidic duct 1. This can be arranged automatically or manually. This way the inventive system can be optimally used all year round, according to ambient temperature conditions.

The options of having the outlet 8 in room 4 and/or the outlet pipe 7 and the outlet 8 in the first well 2 is independent from whether or not there is the recuperator 9 in the building 6, i.e. the recuperator or its absence are compatible with both options.

In case there is the recuperator 9 in the building 6, which is connected to the outlet pipe 7 by the connecting pipe 10, a means can be arranged for automatically or manually opening or closing the connecting pipe 10.

Also the following should be noted as a general information about the inventive system:

The outlet 8 should typically be located higher than the inlet 1 - in such case a convection of air would appear from the inlet 1 to the outlet 8.

The diameter of the outlet 8 should typically be higher than the diameter of the inlet 1, preferably 2-3 times higher. This would facilitate said convection.

As regards the underground wells 2, there can be from 1 to 50 of them. Typically, 3-4 wells 2 are sufficient if the building 6 is a living house. More underground wells 2 are used for larger buildings. The wells 2 have typically the diameter from 70cm to 300cm and are made of concrete or plastic.

As regards the pipes 3 - they are typically made of concrete or plastic. Sewer pipes are preferred - as they are cheap and available. Metal pipes are not preferred for use as the pipes 3. But natural material, such as wood or stalk of a plant, may be very useful, especially in certain areas of the world with less developed infrastructure, but with natural resources available Typically, the pipe 3 between two consecutive underground wells 2 has the length of 30m to 35m. For a living house, the typical total length of pipes 3 is 120m to 140m. Typically, the diameter of the pipes 3 is from 110mm to 500mm. The pipes 3 are typically buried in the ground, at the depth of 1,5m to 2,5m.

As regards the inclination of the pipes 3, it should be at least 1cm per 1m of the length of the pipe 3. The pipe 3, which connects room 4 with the last underground well 2 should be located higher (elevated) at the end of room 4 and should have its lower end in the last underground well 2. Then, likewise, the last-but-one pipe 3, connecting the last well 2 with the last-but-one well 2, should have its higher end in the last well 2 and its lower end in the last-but-one well 2. Generally speaking, the pipes 3 should run from higher to lower end when going from the outlet 8 to the inlet 1 (i.e. in the direction opposite to that of the air convection in the first fluidic duct).

## Claims

1. A system for heating or cooling of a building (6), comprising:
- a first fluidic duct and a second fluidic duct, wherein
- the first fluidic duct forms an open cycle, uses air as a working fluid and comprises successively, when viewed along the path of the air flowing through the said first fluidic duct:
a) an inlet (1) for allowing the air into the first fluidic duct,
b) at least one underground well (2), which is in the form of generally vertical hollow cylinder that is connected with the inlet (1) at the top side of the well (2),
c) at least one underground pipe (3) connected at one end to the side of the underground well (2), while the other end of the pipe (3) is connected to either another well (2) or to a room (4),
wherein the underground well (2) has a larger diameter than the underground pipe (3),
wherein the pipe (3) which connects one of the at least one underground wells (2) to the room (4) has its connection to the room (4) elevated with respect to its connection with their respective underground well (2),
d) the room (4), which on one hand connects with the underground pipe (3) and on the other - is provided with means for directing the air towards the outlet (8), and furthermore the room (4) houses a heat exchanger (5), wherein the air flowing through the first fluidic duct flows along one of the sides of the heat exchanger (5) which allows for exchanging heat,
e) an outlet (8) connected with the heat exchanger (5) configured for allowing the air from the first fluidic duct into atmosphere;
- the second fluidic duct forms a closed cycle and comprises: one or more heat exchangers for heating or cooling of the building (6) and the heat exchanger (5), located in the room (4) and configured for exchanging heat with the air from the first fluidic duct in the room (4),
wherein
the first fluidic duct and the second fluidic duct are fluidically separated,
wherein the underground wells (2) are equipped with means for extracting water therefrom.

2. The system according to claim 1, wherein the second fluidic duct is a heat pump system, which comprises heaters in the building (6), underground installation for collecting heat and the heat exchanger (5) in the room (4).

3. The system according to claim 1, wherein the second fluidic duct is an air conditioning system, which comprises at least one air conditioning unit in the building (6) and the heat exchanger (5) in the room (4).

4. The system according to claim 1, 2 or 3, comprising from 1 to 50 underground wells (2), connected by underground pipes (3), preferably 3 or 4 underground wells (2), connected by underground pipes (3).

5. The system according to any of the preceding claims, wherein the underground pipes (3), that are located between respective underground wells (2), are tilted off the horizontal direction, so that water condensing therein is lead to underground wells (2), preferably are inclined by at least 1cm per 1m of the length of the pipe (3), in the direction from the outlet (8) to the inlet (1).

6. The system according to any of the preceding claims, wherein the underground pipes (3) have the length from 30m to 35m each and/or the length from 120m to 1750m in total and/or have diameter from 110mm to 500mm

7. The system according to any of the preceding claims, wherein the underground pipes (3) are made of plastic, concrete or natural material, such as wood or stalk of a plant.

8. The system according to any of the preceding claims, further comprising one or more air filters, especially placed in the inlet (1).

9. The system according to any of the preceding claims, further comprising one or more means for cleaning the air from mechanical or biological pollution, such as nano-silver linings, especially placed in the underground pipes (3) and/or underground wells (2).

10. The system according to any of the preceding claims, wherein the first fluidic duct ends with an outlet (8) leading from the room (4) to the atmosphere.

11. The system according to any of the preceding claims from 1 to 10, wherein the first fluidic duct additionally comprises an underground outlet pipe (7) between the room (4) and the outlet (8).

12. The system according to claim 11, wherein the outlet pipe (7) connects the room (4) with the outlet (8) located in one of the underground wells (2).

13. The system according to claim 11 or 12, additionally comprising means for automatically or manually opening and closing of the outlet pipe (7).

14. The system according to claim 11, 12 or 13, wherein there is an additional recuperator (9) in the building (6), which recuperator (9) is connected by a connecting pipe (10) with the outlet pipe (7).

## Patentansprüche

1. System zum Heizen oder Kühlen eines Gebäudes (6), umfassend:
- einen ersten strömungstechnischen Kanal und einen zweiten strömungstechnischen Kanal, wobei
- der erste strömungstechnische Kanal einen offenen Kreislauf bildet, Luft als Arbeitsflüssigkeit verwendet und bei Betrachtung entlang des Weges der durch den ersten strömungstechnischen Kanal zirkulierenden Luft nacheinander Folgendes umfasst:
a) einen Einlass (1) zum Einlassen der Luft in den ersten strömungstechnischen Kanal,
b) mindestens einen unterirdischen Brunnen (2) in Form eines im Allgemeinen vertikalen Hohlzylinders, der mit dem Einlass (1) an der Oberseite des Brunnens (2) verbunden ist,
c) mindestens ein unterirdisches Rohr (3), das an einem Ende mit der Seite des unterirdischen Brunnens (2) verbunden ist, während das andere Ende des Rohrs (3) entweder mit einem anderen Brunnen (2) oder mit einem Raum (4) verbunden ist,
wobei der unterirdische Brunnen (2) einen größeren Durchmesser hat als das unterirdische Rohr (3),
wobei das Rohr (3), das einen der mindestens einen unterirdischen Brunnen (2) mit dem Raum (4) verbindet, seine Verbindung mit dem Raum (4) in Bezug auf seine Verbindung mit seinem jeweiligen unterirdischen Brunnen (2) erhöht hat,
d) der Raum (4), der einerseits mit dem unterirdischen Rohr (3) verbunden ist und andererseits mit Mitteln zum Leiten der Luft hin zum Auslass (8) versehen ist, und der Raum (4) außerdem über einen Wärmetauscher (5) verfügt, wobei die durch den ersten strömungstechnischen Kanal zirkulierende Luft entlang einer der Seiten des Wärmetauschers (5) zirkuliert, was einen Wärmeaustausch ermöglicht,
e) einen Auslass (8), der mit dem Wärmetauscher (5) verbunden und zum Ablassen der Luft aus dem ersten strömungstechnischen Kanal in die Atmosphäre konfiguriert ist;
- der zweite strömungstechnische Kanal einen geschlossenen Kreislauf bildet und Folgendes umfasst: einen oder mehrere Wärmetauscher zum Heizen oder Kühlen des Gebäudes (6) und den Wärmetauscher (5), der sich im Raum (4) befindet und zum Wärmeaustausch mit der Luft aus dem ersten strömungstechnischen Kanal im Raum (4) konfiguriert ist,
wobei
der erste strömungstechnische Kanal und der zweite strömungstechnische Kanal strömungstechnisch getrennt sind,
wobei die unterirdischen Brunnen (2) mit Mitteln zur Entnahme von Wasser daraus ausgestattet sind.

2. System nach Anspruch 1, wobei der zweite strömungstechnische Kanal ein Wärmepumpensystem ist, das Heizungen im Gebäude (6), eine unterirdische Anlage zum Sammeln von Wärme und den Wärmetauscher (5) im Raum (4) umfasst.

3. System nach Anspruch 1, wobei der zweite strömungstechnische Kanal eine Klimaanlage ist, die mindestens eine Klimaeinheit im Gebäude (6) und den Wärmetauscher (5) im Raum (4) umfasst.

4. System nach Anspruch 1, 2 oder 3, umfassend 1 bis 50 unterirdische Brunnen (2), die durch unterirdische Rohre (3) verbunden sind, vorzugsweise 3 oder 4 unterirdische Brunnen (2), die durch unterirdische Rohre (3) verbunden sind.

5. System nach irgendeinem der vorhergehenden Ansprüche, wobei die unterirdischen Rohre (3), die sich zwischen den jeweiligen unterirdischen Brunnen (2) befinden, von der horizontalen Richtung aus geneigt sind, sodass das darin kondensierende Wasser zu den unterirdischen Brunnen (2) geleitet wird, vorzugsweise um mindestens 1 cm pro 1 m Länge des Rohrs (3) in der Richtung vom Auslass (8) zum Einlass (1).

6. System nach irgendeinem der vorhergehenden Ansprüche, wobei die unterirdischen Rohre (3) eine Länge von jeweils 30 m bis 35 m und/oder eine Gesamtlänge von 120 m bis 1750 m und/oder einen Durchmesser von 110 mm bis 500 mm aufweisen.

7. System nach irgendeinem der vorhergehenden Ansprüche, wobei die unterirdischen Rohre (3) aus Kunststoff, Beton oder natürlichem Material, wie Holz oder Pflanzenhalmen, hergestellt sind.

8. System nach irgendeinem der vorhergehenden Ansprüche, ferner umfassend einen oder mehrere Luftfilter, die insbesondere im Einlass (1) platziert sind.

9. System nach irgendeinem der vorhergehenden Ansprüche, ferner umfassend ein oder mehrere Mittel zum Reinigen der Luft von mechanischer oder biologischer Verschmutzung, wie Nanosilberauskleidungen, die insbesondere in den unterirdischen Rohren (3) und/oder unterirdischen Brunnen (2) platziert sind.

10. System nach irgendeinem der vorhergehenden Ansprüche, wobei der erste strömungstechnische Kanal mit einem Auslass (8) endet, der aus dem Raum (4) in die Atmosphäre führt.

11. System nach irgendeinem der vorhergehenden Ansprüche 1 bis 10, wobei der erste strömungstechnische Kanal zusätzlich ein unterirdisches Auslassrohr (7) zwischen dem Raum (4) und dem Auslass (8) umfasst.

12. System nach Anspruch 11, wobei das Auslassrohr (7) den Raum (4) mit dem in einem der unterirdischen Brunnen (2) befindlichen Auslass (8) verbindet.

13. System nach Anspruch 11 oder 12, zusätzlich umfassend Mittel zum automatischen oder manuellen Öffnen und Schließen des Auslassrohrs (7).

14. System nach Anspruch 11, 12 oder 13, wobei es im Gebäude (6) einen zusätzlichen Rekuperator (9) gibt, wobei der Rekuperator (9) durch ein Verbindungsrohr (10) mit dem Auslassrohr (7) verbunden ist.

## Revendications

1. Un système de chauffage ou de refroidissement d'un bâtiment (6), comprenant :
- un premier conduit fluidique et un second conduit fluidique, dans lequel
- le premier conduit fluidique forme un cycle ouvert, utilise l'air comme fluide de travail et comprend successivement, vu le long du trajet de l'air circulant dans ledit premier conduit fluidique :
a) une entrée (1) pour laisser entrer l'air dans le premier conduit fluidique,
b) au moins un puits souterrain (2), qui se présente sous la forme d'un cylindre creux généralement vertical, qui est relié à l'entrée (1) sur le côté supérieur du puits (2),
c) au moins un tuyau souterrain (3) relié à une extrémité au côté du puits souterrain (2), tandis que l'autre extrémité du tuyau (3) est reliée soit à un autre puits (2), soit à une pièce (4),
dans lequel le puits souterrain (2) a un diamètre supérieur à celui du tuyau souterrain (3),
dans lequel le tuyau (3) qui relie l'un des au moins un puits souterrain (2) à la pièce (4) a sa liaison à la pièce (4) surélevée par rapport à sa liaison à leur puits souterrain respectif (2),
d) la pièce (4) qui, d'une part, est reliée à la conduite souterraine (3) et, d'autre part, est pourvue de moyens permettant de diriger l'air vers la sortie (8) ; en outre, la pièce (4) abrite un échangeur de chaleur (5), dans lequel l'air circulant dans le premier conduit fluidique s'écoule le long de l'un des côtés de l'échangeur de chaleur (5), ce qui permet l'échange de chaleur,
e) une sortie (8) reliée à l'échangeur de chaleur (5) configurée pour laisser passer l'air du premier conduit fluidique dans l'atmosphère ;
- le second conduit fluidique forme un cycle fermé et comprend : un ou plusieurs échangeurs de chaleur pour le chauffage ou le refroidissement du bâtiment (6) et l'échangeur de chaleur (5), situé dans la pièce (4) et configuré pour échanger de la chaleur avec l'air provenant du premier conduit fluidique dans la pièce (4),
dans lequel
le premier conduit fluidique et le deuxième conduit fluidique sont séparés fluidiquement,
dans lequel les puits souterrains (2) sont équipés de moyens d'extraction de l'eau.

2. Le système selon la revendication 1, dans lequel le second conduit fluidique est un système de pompe à chaleur, qui comprend des appareils de chauffage dans le bâtiment (6), une installation souterraine pour collecter la chaleur et l'échangeur de chaleur (5) dans la pièce (4).

3. Le système selon la revendication 1, dans lequel le second conduit fluidique est un système de climatisation, qui comprend au moins une unité de climatisation dans le bâtiment (6) et l'échangeur de chaleur (5) dans la pièce (4).

4. Le système selon la revendication 1, 2 ou 3, comprenant de 1 à 50 puits souterrains (2), reliés par des tuyaux souterrains (3), de préférence 3 ou 4 puits souterrains (2), reliés par des tuyaux souterrains (3).

5. Le système selon l'une des revendications précédentes, dans lequel les tuyaux souterrains (3), qui sont situés entre les puits souterrains respectifs (2), sont inclinés par rapport à la direction horizontale, de sorte que l'eau qui s'y condense est dirigée vers les puits souterrains (2), de préférence sont inclinés d'au moins 1cm par 1m de longueur du tuyau (3), dans la direction allant de la sortie (8) vers l'entrée (1).

6. Le système selon l'une des revendications précédentes, dans lequel les tuyaux souterrains (3) ont une longueur de 30 à 35 m chacun et/ou une longueur de 120 à 1 750 m au total et/ou ont un diamètre de 110 à 500 mm

7. Le système selon l'une des revendications précédentes, dans lequel les tuyaux souterrains (3) sont en plastique, en béton ou en matériau naturel, tel que le bois ou la tige d'une plante.

8. Le système selon l'une des revendications précédentes, comprenant en outre un ou plusieurs filtres à air, placés notamment dans l'entrée (1).

9. Le système selon l'une des revendications précédentes, comprenant en outre un ou plusieurs moyens pour purifier l'air de la pollution mécanique ou biologique, tels que des revêtements en nanoargent, placés notamment dans les conduites souterraines (3) et/ou les puits souterrains (2).

10. Le système selon l'une des revendications précédentes, dans lequel le premier conduit fluidique se termine par une sortie (8) menant de la pièce (4) vers l'atmosphère.

11. Le système selon l'une des revendications précédentes de 1 à 10, dans lequel le premier conduit fluidique comprend en outre un tuyau de sortie souterrain (7) entre la pièce (4) et la sortie (8).

12. Le système selon la revendication 11, dans lequel le tuyau de sortie (7) relie la pièce (4) à la sortie (8) située dans l'un des puits souterrains (2).

13. Le système selon la revendication 11 ou 12, comprenant en outre des moyens pour ouvrir et fermer automatiquement ou manuellement le tuyau de sortie (7).

14. Le système selon la revendication 11, 12 ou 13, dans lequel il y a un récupérateur supplémentaire (9) dans le bâtiment (6), lequel récupérateur (9) est relié par un tuyau de raccordement (10) au tuyau de sortie (7).
